# EUROPEAN PATENT SPECIFICATION

(11) **EP 0 730 046 B1**
(45) Date of publication and mention of the grant of the patent: **28.06.2000**
(21) Application number: 96102595.4
(22) Date of filing: 01.03.1996
(51) Int. Cl.: C23F 13/12

(54) **Electroconductive anticorrosive system**
Stromleitende Korrosionschutzanordnung
Système électroconducteur anticorrosif

(30) Priority: 01.03.1995 SI 9500064
(43) Date of publication of application: 04.09.1996
(73) Proprietor: EKO d.o.o., 61000 Ljubljana (SI)
(72) Inventor: Trinkaus, Ernest, 61000 Ljubljana (SI)
(74) Representative: Viering, Jentschura & Partner

(56) References cited:
- EP-A- 0 147 977
- EP-A- 0 499 439
- GB-A- 2 216 140
- PATENT ABSTRACTS OF JAPAN vol. 017, no. 025 (C-1017), 18 January 1993 & JP-A-04 247888 (TOBISHIMA CORP;OTHERS: 01), 3 September 1992,

## Description

### Technical Field

The present invention belongs to the field of corrosion protection and relates to an electroconductive anticorrosive system, which on the principle of cathodic protection prolongs the durability of reinforced concrete constructions containing steel reinforcements, which are corrosion-attacked by chlorides.

### Technical Problem

There existed a need for a new electroconductive anticorrosive system for preventing corrosion, particularly of metal reinforcements of concrete objects on the principle of cathodic protection, which system would posses sufficient electric conductivity and long-lasting resistance against aggressive media and, additionally, would be obtainable by the use of a simpler process associated with considerably lower costs than hitherto known systems.

### Prior Art

Electrochemical anticorrosive protection is based on the changeability of the potential on a metal surface. In principle, this potential can be reduced to the value which is negative with regard to the corrosion potential value, which puts the metal into a so-called immunity state. This principle is known as cathodic protection (CP).

The cathodic protection of the steel constructions as well as of steel reinforcements of reinforced concrete objects by supplying *protection current* has been used for a long time.

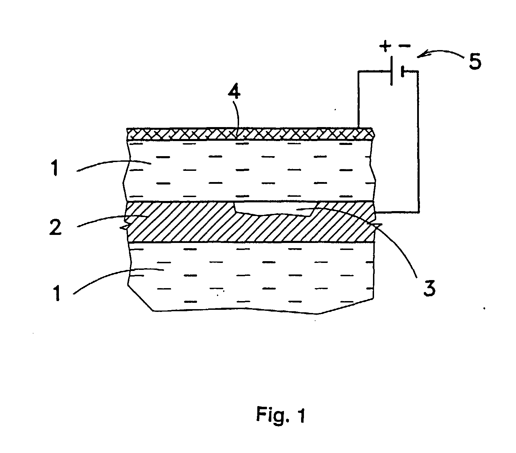

The electric circuit scheme for such a type of cathodic protection is represented in Fig. 1, whereat onto a concrete element 1 containing a steel reinforcement 2, an electroconductive coating 4 is applied. The steel reinforcement 2 is connected as a cathode to the negative pole of a direct-current voltage source 5 and the electroconductive coating 4 is connected as an anode to the positive pole of the source 5. The electrolyte consisting of moisture mixed with chlorine iones and oxygen penetrates the concrete between the electrodes 2 and 4, where a protection current flow is present. By an appropriate density of this current it is possible to achieve the immunity state of the metal, i.e. a protection thereof.

The corrosion damage 3 is caused due to the oxidation (corrosion) of the surface of the steel reinforcement 2 by an automatic electrochemical process when it is not connected to the voltage source 5 due to the establishing of a so-called corrosion potential, whereat the steel reinforcement becomes more positive than the environment.

The process for cathodic protection of reinforced concrete objects attacked by aggressive chlorides that has been most often used so far is one performed by using a titanium net as an anode incorporated into the cement coating. Due to the relatively high resistivity of concrete a compact titanium net must be provided, which makes the process very expensive.

In order to find a simpler and particularly a less expensive cathodic protection, in the recent years various anodic materials have been tested e.g. coatings with different electroconductive substances such as pigments, fillers and binders (R. Liepins, Coating Technology Handbook, ed. Satas D. Marcel Dekker Inc. (1991), 609-619).

At the beginning carbon or graphite particles were used as active pigments or fillers, the main problem being how to achieve a suitable proportion between an adequate conductivity and the compactness or functional durability of the coating. For an appropriate current conductivity a contact between the carbon particles should have been provided. However, due to the too low amount of the binder between the particles the coating became porous as well as sensitive to mechanical and chemical influences. Such a coating aged very rapidly and therefore its conductivity was reduced (A. Calahorra et al., Carbon Filled Paints of Improved Electrical Conductivity, J. of Coating Technol. 64 (1992), 814, 27-31).

In the further development also other pigments or fillers began to be tested as the conductive components of the coatings for cathodic protection e.g. metal particles (zinc, aluminium, copper, silver, titanium and stainless alloy), barium sulfate treated with zinc oxide, silica treated with molybdenum or tin oxide (J. Hocken et al.. Elektrisch leitfähige Pigmente zur antistatischen Farbe und Lack 98 (1992), 1, 19-23 and US Patent 5,068,063, Non-carbon Black Containing Conductive Coating Composition) and conductive binders (S. Hettiarachchi et al., Feasibility Studies on Nondestructive Incorporation of a Conducting Polymer Anode Bed into Bridge Deck Concrete, Strategic Highway Research Program, National Research Council, Washington, D.C. 1991).

It has been found that the main problems at the use of metal particles are especially their stability and price, whereas at the use of other conductive fillers particularly a sufficient and constant conductivity as well as resistivity of the coating to aggressive media is problematic.

### Technical Solution

We have found that the corrosion process of steel reinforcements of concrete constructions can be efficiently prevented on the basis of the principle of cathodic protection by the use of the electroconductive anticorrosive system of the present invention comprising an electroconductive coating containing from 1 to 10% by weight of carbon fibers and additionally carbon fiber strips as (electric) conductors, the electrode system being supplied with direct current of an appropriate density.

Thus, the first object of the present invention is an electroconductive anticorrosive system comprising a coating containing from 1 to 10% by weight of carbon fibers and, additionally, carbon fiber strips as conductors.

By the use of carbon fibers, which are incorporated during the application of the coating, a constant electric charge transport between the cathode (reinforcement) and the anode (electroconductive system) i.e. the distribution of the current over the entire surface is provided. The fibers overlap several times and due to their good compatibility with the coating, a suitable and durable mutual contact, an appropriate electric conductivity as well as optimum system characteristics are achieved.

In the electroconductive anticorrosive system according to the present invention as a basis there may be used known coatings for cathodic protection comprising a polymer binder such as epoxy, polyurethane or other suitable binders; pigments and fillers such as titanium oxide, graphite, barite and carbonates to achieve an optimum structure as well as suitable application and resistance characteristics of the coating; and additives improving the application properties, whereto carbon fibers (e.g. Kureha - M 102 S to C 106 S) are added as the electroconductive medium.

The concrete substrate onto which the electroconductive anticorrosive system is applied may be neutral up to strongly alkaline (pH from 8 to 13). In the concrete various changes due to chemical and electrochemical reactions occur (e.g. pH changes, migration of iones, gases and water). Therefore the anode of the electroconductive system must have an appropriate structure and resistivity in order to sustain all these changes being particularly intensive at the action of cathodic protection.

At anticorrosion protection of steel reinforcements of concrete constructions by the cathodic protection according to the present invention, the cathode (reinforcement) potential must be at least for 100 to 200 mV more negative than the corrosion potential. This is achieved by feeding from a direct-current source having a voltage from 2 to 10 V and making possible an anode current density within the range from a few mA/m² to about 20 mA/m².

On the non-corroded surface (passivated steel) a direct current having a density about 2 mA/m² must be provided. By the increase of the chloride content or by spreading of the corrosion in the reinforced concrete construction, also the current density for achieving the immunity of the reinforcement metal surface is increased. Very high values of current density indicate local damages or a short circuit.

The following example illustrates the preparation of electroconductive anticorrosive system of the present invention and the application thereof.

### Example

Electroconductive anticorrosive system of the present invention comprising an electroconductive coating having the below-stated composition, and additional carbon fibers strips as conductors, which strips are applied onto the object to be protected simultaneously with the coating.

| Electroconductive coating components: | % by weight |
|---|---|
| binder: chlorinated rubber (natural or synthetic) | 20 - 40 |
| | |
| pigments and fillers: TiO₂, graphite, talc | 20 - 30 |
| | |
| solvent: xylene | 30 - 40 |
| | |
| additives for thickening, stabilization, wetting and dispersing | 2 - 5 |
| | |
| carbon fibers (Kureha - M 102 S to C 106 S) | 1 - 10 |

### Preparation of electroconductive coating

The electroconductive coating was prepared in a mixer equipped with a rapidly rotating dispersing stirrer of "Dissolver" type. Into a portion of the binder known additives for wetting and dispersing and fillers were mixed, then the mixture was homogenized. The remaining binder was added followed by a slow addition of carbon fibers under stirring. Subsequently known additives for thickening and stabilization of the coating were added.

In the same manner also coatings using other above-mentioned polymer binders and corresponding solvents can be prepared.

### Application of electroconductive anticorrosive system

The application of the electroconductive anticorrosive system of the present invention is performed by applying an electroconductive coating layer of a thickness of about 200 µm onto a concrete surface, followed by impressing therein the carbon fiber strips (or roving) (1 to 4 m of carbon strips/m² of coating). If necessary, one or two additional 200µm-layers of coating can be applied.

Tests of the cathodic protection activity of the electroconductive anticorrosive system of the present invention have been performed on concrete prism samples in a laboratory for several years by measuring the electrochemical parameters and chloride migration as well as analyzing the concrete composition. There were obtained favourable results both under normal conditions, i.e. at the anode current density of 2mA/m² as well as at an 10 or 100 times increased current density. Thus it has been established that the electroconductive system of the present invention provides a reliable action of cathodic protection for several years even in critical aggressive corrosion media.

Laboratory investigations were also confirmed by a practical application on an object (bridge) both with regard to the activity of the anticorrosive protection and to the application of the coating and carbon fiber conductors.

Thus another aim of the present invention is the use of electroconductive anticorrosive system of the present invention.

The said system is particularly useful for the cathodic protection of steel reinforcements of concrete constructions. Further, it can also be used - if an an appropriate direct-current is applied - for other electrochemical processes such as the removal of chlorides from concrete and for draining concrete.

It is also useful for the treatment of the surfaces where antistatic properties are required.

Still another aim of the present invention is a process for cathodic protection of steel reinforcements of concrete constructions, whereat the positive pole of a direct-current source having a voltage from 2 to 10 V and making possible an anode current density from 2 to 20 mA/m² is connected to the electroconductive anticorrosive system whereas the negative pole of the source is connected to the steel construction.

## Claims

1. Electroconductive anticorrosive system comprising an electroconductive coating, characterized in that said electroconductive coating comprises from 1 to 10% by weight of carbon fibers and said system additionally contains conductors in the form of carbon fiber strips.

2. Use of the electroconductive anticorrosive system according to claim 1 for the cathodic protection of steel reinforcements of concrete constructions.

3. A process for cathodic protection of steel reinforcements of concrete constructions, characterized in that the positive pole of a direct-current source having a voltage from 2 to 10 V and making possible an anode current density from 2 to 20 mA/m² is connected to the electroconductive anticorrosive system according to claim 1 whereas the negative pole of the source is connected to the steel construction.

4. Use of the electroconductive anticorrosive system according to claim 1 for the removal of chlorides from concrete and for draining concrete.

5. Use of the electroconductive anticorrosive system according to claim 1 for the treatment of surfaces where antistatic properties are required.

## Patentansprüche

1. Stromleitende, eine elektrisch leitende Beschichtung umfassende Korrosionsschutzanordnung, dadurch gekennzeichnet, daß die elektrisch leitende Beschichtung von 1 bis 10 Gew.-% Kohlenstoffasern enthält und die Anordnung zusätzlich Stromleiter in der Form von Kohlenstoffaserstreifen enthält.

2. Verwendung der stromleitenden Korrosionsschutzanordnung nach Anspruch 1 zum Kathodenschutz von Stahlarmierungen der Betonkonstruktionen.

3. Verfahren zum Kathodenschutz von Stahlarmierungen der Betonkonstruktionen, dadurch gekennzeichnet, daß man eine Gleichstromquelle mit einer Spannung von 2 bis 10 V, die eine anodische Stromdichte von 2 bis 20 mA/m² ermöglicht, mit ihrem Pluspol an die stromleitende Korrosionsschutzanordnung nach Anspruch 1 und mit ihrem Minuspol an die Stahlkonstruktion anschließt.

4. Verwendung der stromleitenden Korrosionsschutzanordnung nach Anspruch 1 zur Entfernung von Chloriden aus Beton und zur Entwässerung von Beton.

5. Verwendung der stromleitenden Korrosionsschutzanordnung nach Anspruch 1 zur Behandlung von Oberflächen, wo antistatische Eigenschaften gefordert werden.

## Revendications

1. Système anticorrosion électriquement conducteur, comportant un revêtement électriquement conducteur, caractérisé en ce que ledit revêtement électriquement conducteur comprend de 1 à 10 % de fibres de carbone, et ledit système contient de plus des conducteurs présentant la forme de rubans de fibres de carbone.

2. Utilisation du système anticorrosion Électriquement conducteur selon la revendication 1 pour la protection cathodique de renforts en acier de constructions en béton.

3. Procédé pour la protection cathodique de renforts en acier de construction en béton, caractérisé en ce que le pôle positif d'une source de courant continu d'une tension de 2 à 10 V et permettant une densité de courant anodique de 2 à 20 mA/m² est relié au système anticorrosion électriquement conducteur selon la revendication 1, tandis que le pôle négatif de la source est relié à la construction en acier.

4. Utilisation du système anticorrosion électriquement conducteur selon la revendication 1, pour l'élimination des chlorures du béton et pour le drainage du béton.

5. Utilisation du système anticorrosion électriquement conducteur selon la revendication 1, pour le traitement de surfaces sur lesquelles des propriétés antistatiques sont requises.
